# EUROPÄISCHE PATENTANMELDUNG

(11) **EP 1 927 865 A1**
(43) Veröffentlichungstag der Anmeldung: **04.06.2008**
(21) Anmeldenummer: 07117854.5
(22) Anmeldetag: 04.10.2007
(51) Int. Cl.: G01S 7/40

(54) **Verfahren und Vorrichtung zum Ausrichten eines Abstandssensors**

(30) Priorität: 30.11.2006 DE 102006056702
(71) Anmelder: ROBERT BOSCH GMBH, 70442 Stuttgart (DE)
(72) Erfinder: Nobis, Guenter, 72622, Nuertingen (DE); Uffenkamp, Volker, 71638, Ludwigsburg (DE)

(57) **Zusammenfassung**

Die Erfindung betrifft ein Verfahren und eine Vorrichtung (3) mit einer Kamera (9) und einer Auswerteeinrichtung (10) zum Ausrichten eines Abstandssensors (4) an einem Fahrzeug (1). Erfindungsgemäß ist das Fahrzeug (1) auf einer von der Kamera (9) erfassten Fahrbahnebene (13) bezüglich einer Fahrachse (19) ausrichtbar, eine Ausrichtung des Abstandssensors (4) ist mittels der Kamera (9), der Auswerteeinrichtung (10) und zumindest dreier Messpunkte (7) an dem Abstandssensor (4) ermittelbar und der Abstandssensor (4) bei Vorliegen einer Fehlausrichtung bezüglich der Fahrachse (19) ausrichtbar.

## Beschreibung

Die Erfindung betrifft ein Verfahren und eine Vorrichtung mit einer Kamera und einer Auswerteeinrichtung zum Ausrichten eines Abstandssensors an einem Fahrzeug.

Aus der DE 199 41 034 A1 ist eine Einstellvorrichtung mit einem Einstellgerät für Scheinwerfer oder für einen Abstandssensor eines Fahrzeuges und mit einer optischen Justiereinrichtung zum Ausrichten des Einstellgerätes relativ zu dem Fahrzeug bekannt. Durch Aufnahme von an dem Fahrzeug angeordneten Merkmalen ist während der Fahrt zu unterschiedlichen Zeitpunkten nach an sich bekannten trigonometrischen Beziehungen die Fahrachsrichtung berechenbar. Dabei sind zwei Kameras verwendet, die mechanisch stabil verbunden sind und die Verbindung ist zu kalibrieren. Des Weiteren ist eine Rückstrahl- oder Projektionswand zum Ausrichten des Scheinwerfers oder des Abstandssensors erforderlich.

Der Erfindung liegt die Aufgabe zugrunde, ein einfaches Verfahren und eine einfache Vorrichtung zum Ausrichten des Abstandssensors anzugeben.

Diese Aufgabe wird mit den Merkmalen der Hauptansprüche gelöst. Erfindungsgemäß ist das Fahrzeug auf einem von der Kamera erfassten Messplatz bezüglich einer Fahrachse ausrichtbar, eine Ausrichtung des Abstandssensors mittels der Kamera, der Auswerteeinrichtung und zumindest dreier Messpunkte an dem Abstandssensor ermittelbar und der Abstandssensor bei Vorliegen einer Fehlausrichtung bezüglich der Fahrachse ausrichtbar. Der Messplatz ist als Fahrbahnebene eingerichtet und weist eine definierte Fahrachsrichtung auf. Der von der Kamera erfasste Messplatz und die Kamera sind zueinander kalibriert. Die Kamera ist ortsfest. Damit sind Koordinaten des Messplatzes und der Fahrbahnebene in 3 Dimensionen bekannt. Wenn das Fahrzeug auf der Fahrbahnebene bezüglich der Fahrachsrichtung ausgerichtet ist, sind ein Fahrzeugkoordinatensystem und das Messplatzkoordinatensystem parallel zueinander. Die Abstrahlrichtung des Abstandsradars ist mittels der drei Messpunkte definiert. Die zumindest drei Messpunkte werden mittels der Kamera erfasst und die Lage der Messpunkte innerhalb des Messplatzkoordinatensystems bestimmt. Der Abstandssensor wird danach so justiert, dass die Abstrahlrichtung parallel der Fahrachse ausgerichtet ist. Die Fahrachse und eine optische Achse der Kamera liegen dabei vorzugsweise in einer Ebene, die senkrecht auf der Fahrbahnebene steht.

Die Erfassung einer dreidimensionalen Ausrichtung des Abstandssensors mit nur einer Kamera ist möglich, wenn mindestens drei Messpunkte an dem Abstandssensor vorhanden sind, deren dreidimensionale Lagen untereinander in einem lokalen Koordinatensystem bekannt sind. Die Messpunkte bilden dann ein Passpunktsystem. Die Messpunkte sind messbare Punkte und werden auch als Passpunkte oder Merkmale bezeichnet. Als Merkmale sind markante Merkmale des Abstandssensors beziehungsweise Sensorgehäuses oder künstlich aufgebrachte Merkmale verwendbar. Künstliche Merkmale werden auch als Adapter bezeichnet. Die vorzugsweise künstlich aufgebrachten Merkmale weisen eine geometrische Figur mit einem guten Kontrast zu der Umgebung auf. Geeignet sind kreisförmige, dreiecksförmige oder quadratische Merkmale. Die Merkmale können auch als Körper, zum Beispiel als Kugel, Kegel oder Zylinder ausgebildet sein.

Die Bildkoordinaten der auf den Bildsensor abgebildeten Messpunkte werden durch an sich bekannte Methoden der Bildanalyse ermittelt. Dies betrifft sowohl die künstlichen Merkmale als auch am Abstandssensor beziehungsweise am Sensorgehäuse vorhandenen Merkmale. Die Bildanalyse stützt sich auf die Erkennung zum Beispiel von Kanten, Mustern, Grauwerten oder Grauwertgradienten. In einem einfachen Beispiel ergeben sich die Bildkoordinaten eines kreisförmigen Messpunktes aus dem Schwerpunkt der Grauwerte seiner Abbildung auf dem Bildsensor.

Ist eine strahlerzeugende Sensorebene für die Kamera sichtbar oder eine parallele Ebene des Abstandssensors zu der strahlerzeugenden Ebene, dann ist eine direkte Justage des Sensor möglich, wenn mindestens drei Messpunkte auf dieser Ebene sichtbar sind, deren lokale Koordinaten in einem Passpunktsystem bekannt sind, die das erzeugende System repräsentieren.

Die mindestens drei Passpunkte dürfen nicht auf einer Geraden liegen. Zweckmäßigerweise spannen sie ein möglichst großes Dreieck auf. Sind mehr als drei Punkte vorhanden, ist es sinnvoll, dem Punktfeld eine räumliche Ausprägung zu geben. Die tatsächliche Abstrahlrichtung des Abstandsensors bezüglich der Fahrbahnebene und der Fahrachse ist dann mittels lediglich einer Kamera justierbar. Die Fahrbahnebene und die Fahrachse bilden das Fahrzeug-Koordinatensystem. Ist die Ausrichtung der einen Kamera bezüglich des Fahrzeug-Koordinatensystems bekannt, kann die Justage des Abstandssensors im Fahrzeug-Koordinatensystem mit lediglich der einen Kamera durchgeführt werden.

In vorteilhafter Weise wird das Fahrzeug mittels eines Rollensatzes ausgerichtet. Der Rollensatz ist in die Fahrbahnebene eingelassen und definiert die Fahrachse, wenn die Hinterräder des Fahrzeugs auf den parallel angeordneten Rollen aufsetzen.

Unter der Voraussetzung, dass die Messpunkte die Abstrahlrichtung des Sensors repräsentieren, kann eine Justage manuell durch Drehen an den Schrauben erfolgen. Dabei ist eine Dreipunktauflage verwendbar. Auch ist ein Verkippen gegen eine fixe Grundplatte möglich. Anhand einer Darstellung auf einer Anzeigeeinheit ist der Fortschritt der Justage direkt kontrollierbar.

Sind keine kontrastreichen Merkmale vorhanden, können entweder mehrere Adapter als Einzelpunkte in vorhandene Passbohrungen gesteckt werden oder ein komplettes Passpunktfeld findet als Mehrpunktadapter Verwendung. Der aufgesetzte Merkpunktadapter ermöglicht eine größere Ausdehnung des Passpunktsystems und damit eine höhere Einstellgenauigkeit.

Eine alternative Justage ist möglich, wenn die Gewindesteigung der Justageschrauben bekannt ist und aus der Bildinformation der Kamera die notwendigen Umdrehungen jeder Gewindeschraube numerisch bestimmt wird und in einer Anzeigeeinheit dargestellt wird.

Die numerisch berechneten Umdrehungen der Justageschrauben können auch direkt über eine Schnittstelle an einen Montageroboter gesendet werden, der die Einstellung dann automatisiert vornimmt.

Das Verfahren ermöglicht eine Justage des Abstandssensor, auch als Radarsensor bezeichnet. Damit ist gewährleistet, dass die Abstrahlrichtung immer zu der Fahrtrichtung und der Fahrbahnebenen ausgerichtet werden kann. Aufgrund nicht zu vernachlässigbarer Toleranzen im Fahrzeugbau ist das Verfahren damit eine gute Möglichkeit zur Justage, entweder automatisiert in der Fertigung oder manuell in der Werkstatt. Sowohl die Abstandssensor- als auch die Fahrzeugfertigung unterliegen komplexen Prozessen, so dass auch unter optimalen Bedingungen eine Kette von Toleranzen entsteht, die zu einer nicht vernachlässigbaren Abweichung der Abstrahlrichtung des Sensors von der konstruktiv geplanten Richtung führt. Eine Justage ist damit unerlässlich. In der Werkstatt ist nach durchgeführten Karosserie- und/oder Fahrwerksreparaturen eine Überprüfung der Ausrichtung des Sensors und gegebenenfalls eine Justage zwingend notwendig. Die Justage ist hinsichtlich eines Nick-, Gier- und Wankwinkels durchführbar. Bei einem Sensor mit kegelförmiger Abstrahlung sind lediglich der Nick- und der Gierwinkel einzustellen, das Verfahren ist jedoch auf alle Winkel gleichermaßen anwendbar.

Das Verfahren und die Vorrichtung sind entsprechend auch für die Justage weiterer Fahrzeug-Umfeldsensoren einsetzbar.

Zum besseren Verständnis der Erfindung sind nachfolgend Ausführungsbeispiele anhand der Zeichnung näher erläutert.

Es zeigen
Fig. 1 eine Kamera und ein Fahrzeug auf einer Fahrbahnebenen mit einem Rollensatz in perspektivischer Darstellung,
Fig. 2 ein Passpunktsystem abgebildet auf einem Bildsensor einer Kamera in schematischer Darstellung,
Fig. 3A einen Abstandssensor einstellbar an einer Grundplatte mittels dreier Schrauben und Messpunkte in schematischer Darstellung von der Seite,
Fig. 3B den Abstandssensor einstellbar an einer Grundplatte mittels der drei Schrauben und der Messpunkte in Draufsicht,
Fig. 4 einen weiteren Abstandssensor einstellbar an einer Grundplatte mittels dreier Schrauben und Adapter in schematischer Darstellung von der Seite,
Fig. 5 einen der Adapter in Draufsicht und
Fig. 6 einen dritten Abstandssensor mit einem aufgesetzten Mehrpunktadapter in Draufsicht.

In den verschiedenen Figuren sind ähnliche oder dieselben Elemente durch gleiche Bezugszeichen bezeichnet.

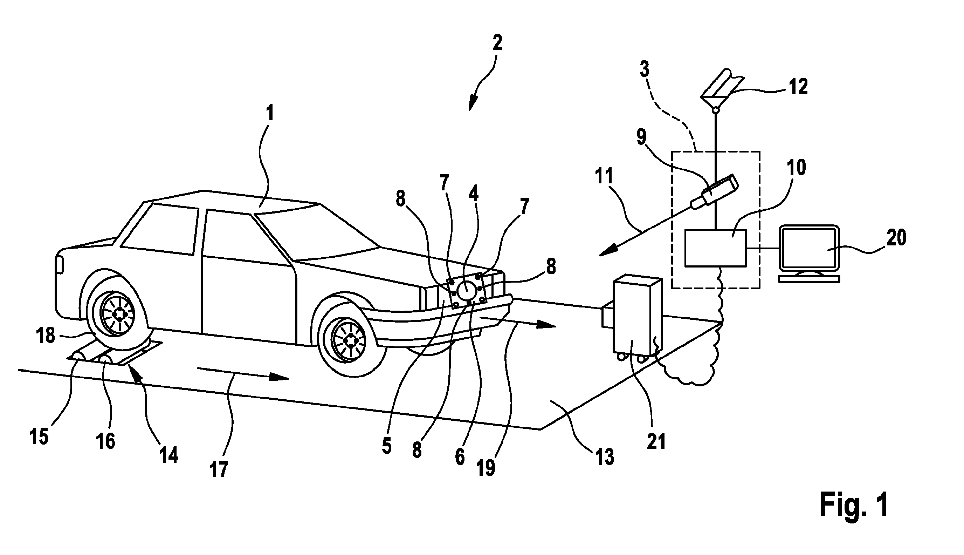

Figur 1 zeigt ein Kraftfahrzeug 1 auf einem Messplatz 2, der eine Vorrichtung 3 zum Ausrichten eines Abstandssensors 4 aufweist. Das Kraftfahrzeug 1 weist in einem Frontbereich 5 eine Platte 6 mit dem Abstandssensor 4, Messpunkt 7 und Schrauben 8 auf. Die Vorrichtung 3 weist eine Kamera 9 und eine Auswerteeinrichtung 10 auf. Das Fahrzeug 1 ist auf den Messplatz 2 vor die Kamera 9 verbracht, so dass im Idealfall eine optische z-Achse 11 der Kamera 9 auf die Platte 6 ausgerichtet ist. Die Kamera 9 ist ortsfest an einer Decke 12 befestigt. Der Messplatz 2 weist eine Fahrbahnebene 13 auf. In der Fahrbahnebene 13 ist ein Rollensatz 14 mit zumindest zwei Rollen 15 und 16 eingelassen. Der Rollensatz 14 definiert eine Messplatzausrichtung 17, die der Auswerteeinrichtung 10 durch eine Kalibrierung bekannt ist. Steht das Fahrzeug 1 mit Hinterrädern 18 im Rollensatz 14, so richtet es sich bei rotierenden Rollen 15 und 16 automatisch im Messplatz 2 aus. Dann ist eine Fahrachse 19 des Fahrzeugs 1 parallel der Messplatzausrichtung 17 und damit der Auswerteeinrichtung 10 bekannt. Die Kamera 9 ist an die Auswerteinrichtung 10 angeschlossen, die eine Anzeigeeinheit 20 zur Anzeige notwendiger Justageschritte zur Ausrichtung des Abstandssensors 4 bezüglich der Fahrachse 19 und der Fahrbahnebene 13 ansteuert. Alternativ dazu ist ein Montageroboter 21 von der Auswerteinrichtung 10 ansteuerbar. Der Roboter 21 verdreht die Schrauben 8 des Abstandssensors 4 und justiert damit den Abstandssensor 4 direkt.

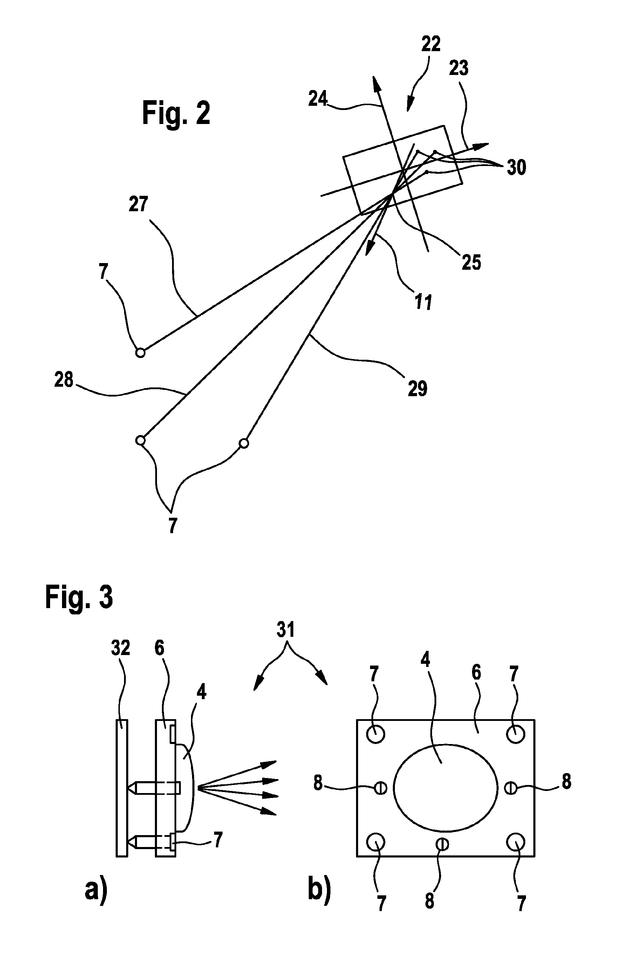

Figur 2 zeigt einen ebenen Bildsensor 22 der Kamera 9. Der Bildsensor 22 weist eine x-Achse 23, eine y-Achse 24 und die optische z-Achse 11 auf. In einem Projektionszentrum 25 bündeln sich Abbildungsstrahlen 27 - 29, mit deren Hilfe sich die Messpunkte 7 auf den Bildsensor 22 abbilden lassen. Aufgrund der Lage der Bildpunkte 30 auf dem Sensor 22 lässt sich anhand trigonometrischer Funktionen die Fehlstellung des Abstandssensors 4 berechnen und korrigieren.

Figur 3A und 3B zeigen eine Montageeinheit 31 mit der Platte 6 und dem Abstandssensor 4, der auf der Platte 6 angeordnet ist. Die Platte 6 weist vier Messpunkte 7 auf, die ein Passpunktsystem bilden. Die Lage der vier Messpunkte 7 untereinander ist bekannt. Die Platte 6 weist drei Justierschrauben 8 auf mittels deren sich ein Nickwinkel und ein Gierwinkel einstellen lässt. Die Justierschrauben 8 sind drehbar und verstellen die Platte 6 gegen eine Grundplatte 32.

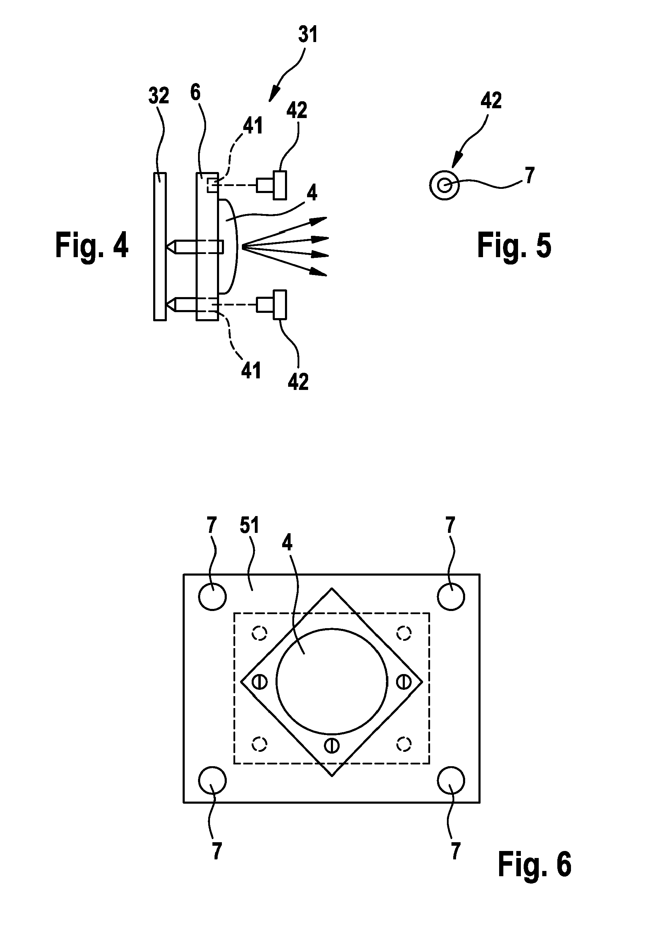

Figur 4 zeigt die Montageinheit 31 mit der Platte 6, die gegen die Grundplatte 32 verstellbar ist. In Passbohrungen 41 sind Adapter 42 mit Messpunkten 7 einsetzbar.

Figur 5 zeigt einen der Adapter 42, der als Messpunkte 7 einen weißen Punkt mit einer schwarzen Umrandung aufweist.

Figur 6 zeigt einen Abstandssensor 4 mit einem aufgesetzten Mehrpunktadapter 51, der eine größere Ausdehnung des Passpunktsystems über die Platte 6 hinaus ermöglicht.

## Patentansprüche

1. Verfahren zum Ausrichten eines Abstandssensors (4) an einem Fahrzeug (1) mittels einer Vorrichtung (3), die eine Kamera (9) und eine Auswerteeinrichtung (10) aufweist, **gekennzeichnet durch** folgende Verfahrensschritte:
das Fahrzeug (1) wird auf einer von der Kamera (9) erfassten Fahrbahnebene (13) bezüglich einer Fahrachse (19) ausgerichtet,
eine Ausrichtung des Abstandssensors (4) wird mittels der Kamera (9), der Auswerteeinrichtung (10) und zumindest dreier Messpunkte (7) an dem Abstandssensor (4) ermittelt,
der Abstandssensor (4) wird bei Vorliegen einer Fehlausrichtung bezüglich der Fahrachse (19) und bezüglich der Fahrbahnebene (13) ausgerichtet.

2. Verfahren nach Anspruch 1, **dadurch gekennzeichnet, dass** das Fahrzeug mittels eines Rollensatzes ausgerichtet wird.

3. Verfahren nach Anspruch 1, **dadurch gekennzeichnet, dass** der Abstandssensor (4) eine Grundplatte (32) aufweist, gegen die der Sensor (4) verstellbar ist.

4. Verfahren nach Anspruch 1, **dadurch gekennzeichnet, dass** der Abstandssensor (4) drei Schrauben (8) zur Justage aufweist.

5. Verfahren nach Anspruch 1, **dadurch gekennzeichnet, dass** Messpunkte (7) auf Adaptern (42) verwendet sind.

6. Verfahren nach Anspruch 1, **dadurch gekennzeichnet, dass** der Abstandssensor (4) eine Kombination aus am Sensor (4) vorhandenen Messpunkten (7) und Adaptern (42) aufweist.

7. Verfahren nach Anspruch 1, **dadurch gekennzeichnet, dass** der Abstandssensor (4) einen Mehrpunktadapter (51) aufweist.

8. Verfahren nach Anspruch 1, **dadurch gekennzeichnet, dass** die Auswerteeinrichtung (10) einen Montageroboter (21) steuert.

9. Verfahren nach Anspruch 1, **dadurch gekennzeichnet, dass** die Auswerteeinrichtung (10) mit einer Anzeigeeinheit (20) verbunden ist.

10. Vorrichtung (3) mit einer Kamera (9) und einer Auswerteeinrichtung (10) zum Ausrichten eines Abstandssensors (4) an einem Fahrzeug (1), **dadurch gekennzeichnet, dass** das Fahrzeug (1) auf einer von der Kamera (9) erfassten Fahrbahnebene (13) bezüglich einer Fahrachse (19) ausrichtbar, eine Ausrichtung des Abstandssensors (4) mittels der Kamera (9), der Auswerteeinrichtung (10) und zumindest dreier Messpunkte (7) an dem Abstandssensor (4) ermittelbar und der Abstandssensor (4) bei Vorliegen einer Fehlausrichtung bezüglich der Fahrachse (19) ausrichtbar ist.
